# EUROPÄISCHE PATENTANMELDUNG

(11) **EP 1 935 525 A1**
(43) Veröffentlichungstag der Anmeldung: **25.06.2008**
(21) Anmeldenummer: 07120549.6
(22) Anmeldetag: 13.11.2007
(51) Int. Cl.: B21D 39/04, F16L 33/207

(54) **Verfahren zur Herstellung einer Schlauchleitung und Schlauchleitung**

(30) Priorität: 22.12.2006 DE 102006061113
(71) Anmelder: ContiTech Kühner GmbH & Cie. KG, 71570 Oppenweiler (DE)
(72) Erfinder: Marschall, Peter, 71579, Spiegelberg-Jux (DE); Röck, Claus, 71579, Spiegelberg (DE)
(74) Vertreter: Finger, Karsten

(57) **Zusammenfassung**

Die Erfindung betrifft Verfahren zur Herstellung einer Schlauchleitung mit mindestens einem Schlauchanschluss, wobei der Schlauchanschluss mindestens einen Schlauchnippel (1) und mindestens eine Presshülse (9) aufweist. Das Verfahren ist dadurch gekennzeichnet, dass ein Anschlagring (5) in einer Montagenut (4) des Schlauchnippels (1) eingreift und der Schlauchnippel (1) mit axialem Spiel (6) in dem Anschlagring (5) gehalten wird, wobei der Schlauchnippel (1) axial leicht verschiebbar ist. Beim Aufschieben des Schlauchabschnittes (10) wird der Schlauchnippel (1) axial unter Ausnutzung des axialen Spieles (6) bis zum Anschlag an den Anschlagring (5) geschoben. Nachdem der Schlauchabschnitt (10) entspannt ist, lässt sich die axiale Position des Schlauchnippels (1) bestimmen, und bei korrekter Lage des Schlauchnippels (1) die Presshülse verpressen.

## Beschreibung

Die Erfindung betrifft ein Verfahren zur Herstellung einer Schlauchleitung mit mindestens einem Schlauchanschluss, wobei der Schlauchanschluss mindestens einen Schlauchnippel und mindestens eine Presshülse aufweist. Die Erfindung betrifft weiterhin eine nach dem Verfahren hergestellte Schlauchleitung.

Schlauchleitungen der genannten Art werden in großer Vielfalt in der Schlauchtechnik, beispielsweise auch in flexiblen Klimaleitungen oder Druckschläuchen eingesetzt. Die Nippel der Schlauchanschlüsse weisen dabei meist ringnutförmig eingestochene rollierte oder geprägte Nuten auf, in die der auf den Nippel aufgeschobene Schlauch durch die radial verpresste Schlauchhülse gedrückt wird, wodurch eine gute Sicherheit gegen das Abrutschen des Schlauches vom Nippel gegeben ist.

Die DE 196 35 053 A1 zeigt einen derartigen Schlauchanschluss, bei dem zur weiteren Verbesserung der Abrutschsicherheit der Schlauchnippel zwei zusätzliche Ringnuten aufweist, in die der von seiner Gummidecklage befreite Schlauch einpressbar ist, so dass die Festigkeitsträger des Schlauches in direktem Kontakt zu dem Nippel stehen. Eine ähnliche Ausführungsfbrm ist auch in der DE 199 23 173 A1 gezeigt.

Bei den genannten Ausführungsformen ist es jedoch schwierig zu erkennen, ob vor der Verpressung der Presshülse der Schlauch richtig positioniert und weit genug auf den Nippel aufgeschoben ist.

Der Erfindung liegt die Aufgabe zugrunde, ein Verfahren zu schaffen, das eine automatisierbare, reproduzierbare und nachprüfbare Montage der Schlauchanschlüsse der Schlauchleitung der genannten Art ermöglicht.

Diese Aufgabe wird dadurch gelöst, dass das Verfahren mindestens folgende Arbeitsschritte aufweist, nämlich
- Herstellen eines Schlauchnippels mit einer radial umlaufenden Montagenut mit vorbestimmter axialer Ausdehnung,
- Einlegen des Schlauchnippels in eine Montagevorrichtung mit einem geteilten Anschlagring, dessen Dicke geringer ist als axiale Ausdehnung der Montagenut des Schlauchnippels,
- Schließen des Anschlagringes, so dass der Anschlagring in die Montagenut des Schlauchnippels eingreift und der Schlauchnippel mit axialem Spiel in dem Anschlagring gehalten wird, wobei der Schlauchnippel axial leicht verschiebbar ist,
- Aufstecken der unverpressten Presshülse auf das einem Schlauchabschnitt zugeordnete Ende des Schlauchnippels,
- Aufschieben des Schlauchabschnittes mit einer Aufschiebevorrichtung auf das dem Schlauchabschnitt zugeordnete Ende des Schlauchnippels, wobei der Schlauchabschnitt axial gestaucht wird und gegen einen radial nach innen weisenden Vorsprung der Presshülse stößt und diese vor sich herschiebt, und wobei der Schlauchnippel axial unter Ausnutzung des axialen Spieles bis zum Anschlag an den Anschlagring in den Anschlagring geschoben wird,
- Prüfen der axialen Position der Presshülse durch einen Anschlagsensor, wobei bei Freigabe durch den Anschlagsensor der Aufschiebevorgang beendet wird,
- Zurückfahren der Aufschiebevorrichtung in eine Messstellung, so dass der Schlauchabschnitt entspannt wird und der Schlauchnippel um ein sich aus dem Rückfahrweg der Aufschiebevorrichtung und der Rückfederung des Schlauchabschnittes ergebendes Rückzugsmaß innerhalb des axialen Spieles zwischen Schlauchnippel und Anschlagring in der Montagenut aus dem Anschlagring herausgezogen wird,
- Prüfen der axialen Position des Schlauchnippels mittels einer Messvorrichtung und Abgleich mit einem vorgegebenen Sollwert,
- Nach Freigabe durch die Messvorrichtung Verpressen der Presshülse durch ein geeignetes Werkzeug,
- Öffnen des Anschlagringes und der Vorrichtung,
- Entnahme der fertigen Schlauchleitung.

Dadurch, dass der Schlauchnippel im Anschlagring axial leicht verschiebbar ist, stellt sich nach Entspannung des Schlauchabschnittes selbsttätig eine axiale Position des Schlauchnippels ein, die relativ zu einem vorgegebenen Wert abgleichbar ist. Ist der Schlauchabschnitt beim Aufschieben auf den Schlauchnippel korrekt und weit genug aufgeschoben, ergibt sich nach Entspannung des Schlauchabschnittes eine vorbestimmte Gesamtlänge der Schlauchleitung aus der Länge des Schlauchabschnitts und der Länge des aus dem Schlauchabschnitt herausragenden Schlauchnippels. Ist dagegen der Schlauchabschnitt nicht weit genug auf den Schlauchnippel aufgeschoben, ist die sich daraus ergebende Gesamtlänge der Schlauchleitung größer als der vorgegebene Wert. In diesem Fall gibt die Messvorrichtung den Prozess nicht frei, die Presshülse wird nicht verpresst. Die Schlauchleitung kann dann nachgearbeitet oder ausgesondert werden.

Der Erfindung liegt weiterhin die Aufgabe zugrunde, eine Schlauchleitung zu schaffen, die durch eine automatisierbare, reproduzierbare und nachprüfbare Montage der Schlauchanschlüsse herstellbar ist.

Diese Aufgabe wird dadurch gelöst, dass die Schlauchleitung durch ein Verfahren hergestellt ist, das folgende Arbeitsschritte aufweist, nämlich
- Herstellen eines Schlauchnippels mit einer radial umlaufenden Montagenut mit vorbestimmter axialer Ausdehnung,
- Einlegen des Schlauchnippels in eine Montagevorrichtung mit einem geteilten Anschlagring, dessen Dicke geringer ist als axiale Ausdehnung der Montagenut des Schlauchnippels,
- Schließen des Anschlagringes, so dass der Anschlagring in die Montagenut des Schlauchnippels eingreift und der Schlauchnippel mit axialem Spiel in dem Anschlagring gehalten wird, wobei der Schlauchnippel axial leicht verschiebbar ist,
- Aufstecken der unverpressten Presshülse auf das dem Schlauchabschnitt zugeordnete Ende des Schlauchnippels,
- Aufschieben des Schlauchabschnittes mit einer Aufschiebevorrichtung auf das dem Schlauchabschnitt zugeordnete Ende des Schlauchnippels, wobei der Schlauchabschnitt axial gestaucht wird und gegen einen radial nach innen weisenden Vorsprung der Presshülse stößt und diese vor sich herschiebt, und wobei der Schlauchnippel axial unter Ausnutzung des axialen Spieles bis zum Anschlag an den Anschlagring in den Anschlagring geschoben wird,
- Prüfen der axialen Position der Presshülse durch einen Anschlagsensor, wobei bei Freigabe durch den Anschlagsensor der Aufschiebevorgang beendet wird,
- Zurückfahren der Aufschiebevorrichtung in eine Messstellung, so dass der Schlauchabschnitt entspannt wird und der Schlauchnippel um ein sich aus dem Rückfahrweg der Aufschiebevorrichtung und der Rückfederung des Schlauchabschnittes ergebendes Rückzugsmaß innerhalb des axialen Spieles zwischen Schlauchnippel und Anschlagring in der Montagenut aus dem Anschlagring herausgezogen wird,
- Prüfen der axialen Position des Schlauchnippels mittels einer Messvorrichtung und Abgleich mit einem vorgegebenen Sollwert,
- Nach Freigabe durch die Messvorrichtung Verpressen der Presshülse durch ein geeignetes Werkzeug,
- Öffnen des Anschlagringes und der Vorrichtung,
- Entnahme der fertigen Schlauchleitung.

Mit diesem Verfahren ist eine Schlauchleitung mit Armatur automatisiert herstellbar. Durch die Prüfung der Länge der Schlauchleitung mittels automatischer Sensoren ist sichergestellt, dass keine fehlerhaften Schlauchleitungen in den weiteren Fertigungsprozess gelangen. Außerdem sind alle genannten Fertigungsschritte in einer Vorrichtung durchfiihrbar, so dass die Schlauchleitung mit geringsten manuellem Aufwand herstellbar ist.

Anhand der Zeichnung wird nachstehend ein Beispiel der Erfindung näher erläutert. Es zeigt
- Fig. 1: einen in eine Vorrichtung mit Anschlagring eingelegten Schlauchnippel,
- Fig. 2: den Schlauchnippel mit eineraufgesteckten Presshülse beim Aufschieben eines Schlauchabschnittes,
- Fig. 3: den Schlauchnippel in Pressposition mit einem Anschlagsensor und,
- Fig. 4: die Schlauchleitung beim Verpressen der Presshülse.

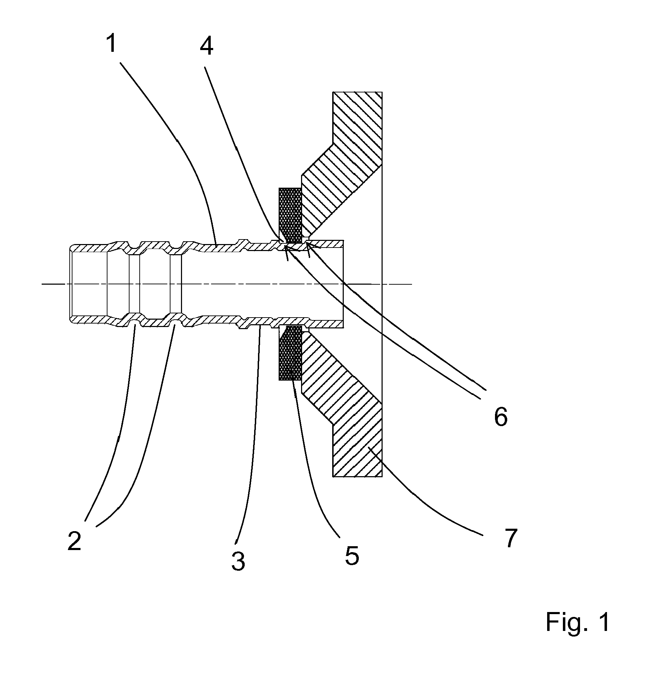

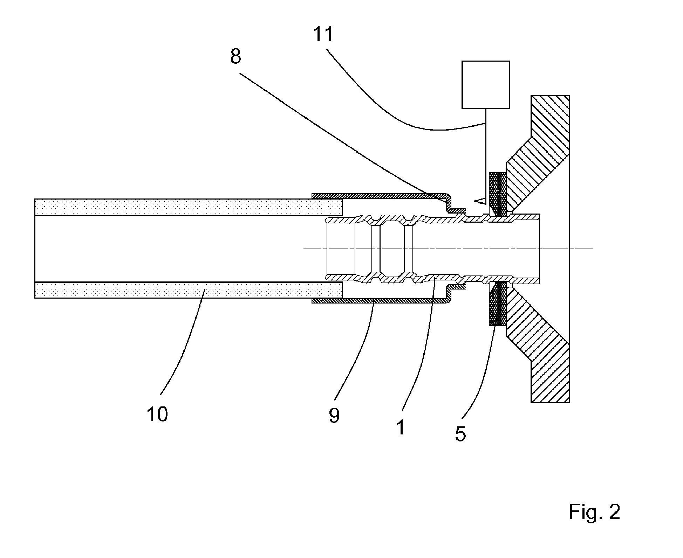

Der in Fig. 1 gezeigte Schlauchnippel 1 weist neben Halterillen 2 und einer Eingriffsnut 3 eine Montagenut 4 auf. In die Montagenut 4 greifen Backen eines teilbaren Anschlagringes 5 so ein, dass der Schlauchnippel 1 in dem Anschlagring 5 ein axiales Spiel 6 aufweist. Die Passung zwischen Schlauchnippel 1 und Anschlagring 5 erlaubt eine leichte Verschiebbarkeit des Schlauchnippels 1 in dem Anschlagring 5. Der Anschlagring 5 ist Bestandteil einer hier nur angedeuteten Montagevorrichtung 7. In Fig. 2 ist eine einen Boden 8 aufweisende Presshülse 9 auf den Schlauchnippel 1 aufgesteckt. Ein Schlauchabschnitt 10 wird auf den Schlauchnippel 1 aufgeschoben. Ein Anschlagsensor 11 prüft die axiale Lage per Presshülse 9, sobald diese ihre Montageposition annähernd erreicht hat.

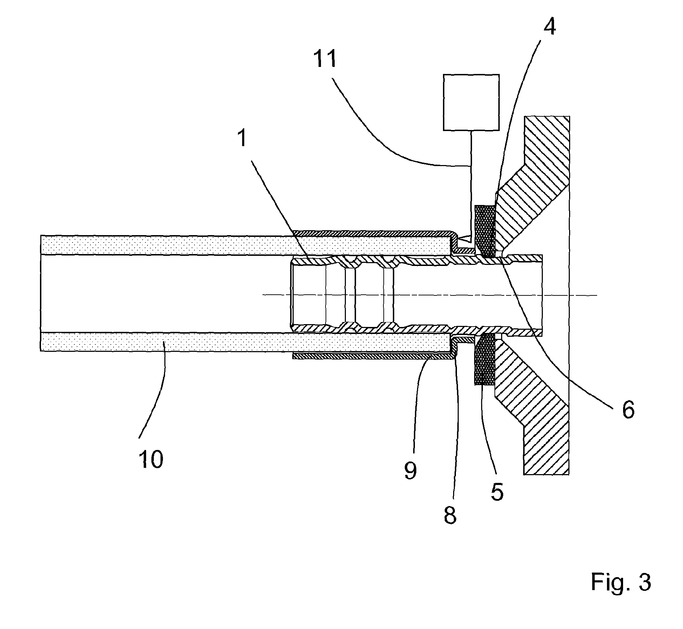

In Fig. 3 sind Schlauchabschnitt 10 und Presshülse 9 in ihrer Montageposition auf dem Schlauchnippel 1 angekommen. Der Schlauchabschnitt 10 ist durch axialen Druck gegen den Boden 8 der Presshülse 9 gedrückt. Durch den axialen Druck auf den Schlauchabschnitt 10 und die beim Aufschieben des Schlauchabschnitts 10 auf den Schlauchnippel 1 entstehende Reibung ist der Schlauchnippel 1 in den Anschlagring 5 axial hineingeschoben. Das axiale Spiel 6 zwischen Anschlagring 5 und Schlauchnippel 1 in der Montagenut 4 ist einseitig aufgebraucht, der Schlauchnippel 1 schlägt gegen den Anschlagring 5 an. Der Anschlagsensor 11 erkennt die korrekte Lage der Presshülse 9 und gibt den nächsten Arbeitsschritt frei.

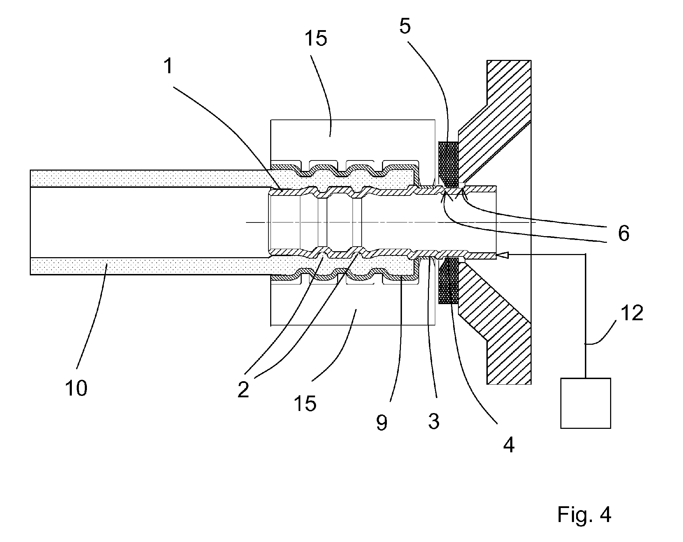

In Fig. 4 ist das Aufschieben des Schlauchabschnitts 10 beendet. Der Schlauchabschnitt 10 wurde entspannt und axial vom Anschlagring 5 weg in eine Messposition zurückgezogen, so dass wieder ein axiales Spiel 6 zwischen Schlauchnippel 1 und Anschlagring 5 in der Montagenut 4 in beiden Richtungen freigegeben ist. Eine Messvorrichtung 12 prüft die axiale Lage des Schlauchnippels 10 und errechnet aus der bekannten Länge des Schlauchabschnitts 10 und der axialen Länge des aus dem Schlauchabschnitt 10 herausragenden Schlauchnippels 1 die Gesamtlänge der Schlauchleitung. In dieser Figur ist diese korrekt, so dass die Messvorrichtung 12 den nächsten Arbeitsschritt freigegeben hat und die Presshülse 9 durch eine nicht gezeigte Pressvorrichtung mit zwei Pressbacken 15 radial in Richtung auf den Schlauchnippel 1 verpresst wird. Dabei wird der Schlauchabschnitt 10 in die Haltrillen 2 und die Presshülse 9 in die Eingriffsnut 3 gepresst.

Auf diese Weise entsteht eine feste Verbindung zwischen Schlauchnippel 1, Schlauchabschnitt 10 und Presshülse 9, die durch die gezeigten Fertigungssschritte prozesssicher herstellbar ist.

### Bezugszeichenliste

### (Teil der Beschreibung)

- 1: Schlauchnippel
- 2: Halterillen
- 3: Eingriffsnut
- 4: Montagenut
- 5: Anschlagring
- 6: axiales Spiel des Schlauchnippels 1 im Anschlagring 5
- 7: Montagevorrichtung
- 8: Boden der Presshülse 9
- 9: Presshülse
- 10: Schlauchabschnitt
- 11: Anschlagsensor
- 12: Messvorrichtung
- 15: Pressbacken

## Patentansprüche

1. Verfahren zur Herstellung einer Schlauchleitung mit mindestens einem Schlauchanschluss, wobei der Schlauchanschluss mindestens einen Schlauchnippel (1) und mindestens eine Presshülse (9) aufweist,
**gekennzeichnet dadurch, dass** das Verfahren mindestens folgende Arbeitsschritte aufweist, nämlich
- Herstellen eines Schlauchnippels (1) mit einer radial umlaufenden Montagenut (4) mit vorbestimmter axialer Ausdehnung,
- Einlegen des Schlauchnippels (1) in eine Montagevorrichtung (7) mit einem geteilten Anschlagring (5), dessen Dicke geringer ist als axiale Ausdehnung der Montagenut (4) des Schlauchnippels (1),
- Schließen des Anschlagringes (5), so dass der Anschlagring (5) in die Montagenut (4) des Schlauchnippels (1) eingreift und der Schlauchnippel (1) mit axialem Spiel (6) in dem Anschlagring (5) gehalten wird, wobei der Schlauchnippel (1) axial leicht verschiebbar ist,
- Aufstecken der unverpressten Presshülse (9) auf das einem Schlauchabschnitt (10) zugeordnete Ende des Schlauchnippels (1),
- Aufschieben des Schlauchabschnittes (10) mit einer Aufschiebevorrichtung auf das dem Schlauchabschnitt (10) zugeordnete Ende des Schlauchnippels (1), wobei der Schlauchabschnitt (10) axial gestaucht wird und gegen einen radial nach innen weisenden Vorsprung (8) der Presshülse (9) stößt und diese vor sich herschiebt, und wobei der Schlauchnippel (1) axial unter Ausnutzung des axialen Spieles (6) bis zum Anschlag an den Anschlagring (5) in den Anschlagring (5) geschoben wird,
- Prüfen der axialen Position der Presshülse (9) durch einen Anschlagsensor (11), wobei bei Freigabe durch den Anschlagsensor (11) der Aufschiebevorgang beendet wird,
- Zurückfahren der Aufschiebevorrichtung in eine Messstellung, so dass der Schlauchabschnitt (10) entspannt wird und der Schlauchnippel (1) um ein sich aus dem Rückfahrweg der Aufschiebevorrichtung und der Rückfederung des Schlauchabschnittes (10) ergebendes Rückzugsmaß innerhalb des axialen Spieles (6) zwischen Schlauchnippel (1) und Anschlagring (5) in der Montagenut (4) aus dem Anschlagring (5) herausgezogen wird,
- Prüfen der axialen Position des Schlauchnippels (1) mittels einer Messvorrichtung (12) und Abgleich mit einem vorgegebenen Sollwert,
- Nach Freigabe durch die Messvorrichtung (12) Verpressen der Presshülse durch ein geeignetes Werkzeug (15),
- Öffnen des Anschlagringes (5) und der Vorrichtung (7),
- Entnahme der fertigen Schlauchleitung.

2. Schlauchleitung mit mindestens einem Schlauchanschluss, wobei der Schlauchanschluss mindestens einen Schlauchnippel (1) und mindestens eine Presshülse (9) aufweist, **dadurch gekennzeichnet, dass** die Schlauchleitung durch ein Verfahren hergestellt ist, das folgende Arbeitsschritte aufweist, nämlich
- Herstellen eines Schlauchnippels (1) mit einer radial umlaufenden Montagenut (4) mit vorbestimmter axialer Ausdehnung,
- Einlegen des Schlauchnippels (1) in eine Montagevorrichtung (7) mit einem geteilten Anschlagring (5), dessen Dicke geringer ist als axiale Ausdehnung der Montagenut (4) des Schlauchnippels (1),
- Schließen des Anschlagringes (5), so dass der Anschlagring (5) in die Montagenut (4) des Schlauchnippels (1) eingreift und der Schlauchnippel (1) mit axialem Spiel (6) in dem Anschlagring (5) gehalten wird, wobei der Schlauchnippel (1) axial leicht verschiebbar ist,
- Aufstecken der unverpressten Presshülse (9) auf das einem Schlauchabschnitt (10) zugeordnete Ende des Schlauchnippels (1),
- Aufschieben des Schlauchabschnittes (10) mit einer Aufschiebevorrichtung auf das dem Schlauchabschnitt (10) zugeordnete Ende des Schlauchnippels (1), wobei der Schlauchabschnitt (10) axial gestaucht wird und gegen einen radial nach innen weisenden Vorsprung (8) der Presshülse (9) stößt und diese vor sich herschiebt, und wobei der Schlauchnippel (1) axial unter Ausnutzung des axialen Spieles (6) bis zum Anschlag an den Anschlagring (5) in den Anschlagring (5) geschoben wird,
- Prüfen der axialen Position der Presshülse (9) durch einen Anschlagsensor (11), wobei bei Freigabe durch den Anschlagsensor (11) der Aufschiebevorgang beendet wird,
- Zurückfahren der Aufschiebevorrichtung in eine Messstellung, so dass der Schlauchabschnitt (10) entspannt wird und der Schlauchnippel (1) um ein sich aus dem Rückfahrweg der Aufschiebevorrichtung und der Rückfederung des Schlauchabschnittes (10) ergebendes Rückzugsmaß innerhalb des axialen Spieles (6) zwischen Schlauchnippel (1) und Anschlagring (5) in der Montagenut (4) aus dem Anschlagring (5) herausgezogen wird,
- Prüfen der axialen Position des Schlauchnippels (1) mittels einer Messvorrichtung (12) und Abgleich mit einem vorgegebenen Sollwert,
- Nach Freigabe durch die Messvorrichtung (12) Verpressen der Presshülse durch ein geeignetes Werkzeug (15),
- Öffnen des Anschlagringes (5) und der Vorrichtung (7),
- Entnahme der fertigen Schlauchleitung.
